# EUROPEAN PATENT SPECIFICATION

(11) **EP 2 156 739 B1**
(45) Date of publication and mention of the grant of the patent: **28.12.2011**
(21) Application number: 09167176.8
(22) Date of filing: 04.08.2009
(51) Int. Cl.: A21B 3/04, F24C 15/32

(54) **Vapour apparatus for radiator ovens**
Schwadenapparat für Radiatorenofen
Générateur de vapeur pour fours à radiateurs

(30) Priority: 21.08.2008 DE 102008041412
(43) Date of publication of application: 24.02.2010
(73) Proprietor: MIWE Michael Wenz GmbH, 97450 Arnstein (DE)
(72) Inventor: Frings, Thomas, 53518, Adenau (DE)
(74) Representative: Freischem, Werner

(56) References cited:
- EP-A1- 1 550 828
- EP-A1- 1 739 363
- DE-A1-102005 058 592
- DE-U1-202005 017 560
- US-A- 4 648 381

## Description

### Technical Field

The invention concerns a baking oven as set forth in the preamble of claim 1.

### Background Art

Such baking ovens are known for example from DE 10 2005 058 592 A1. The vapour generation device described in that publication serves to generate a vapour cloud for the vapour treatment of baking items in an oven and is also referred to as a vapour apparatus. It is generally mounted as a separate component to the oven housing. That arrangement has the advantage that the vapour apparatus can be manufactured separately from the oven and fitted thereto.

DE 20 2005 017 560 U1 also shows such a baking oven. The baking oven is in the form of a cabinet and has a rear wall, two side walls, a top wall and a bottom wall. That baking oven is equipped with a vapour generation installation. That vapour generation installation includes a vapour apparatus which is fitted on to the baking oven.

### Summary of invention

The problem of the present invention is to raise the thermal efficiency of the oven and to improve the baking result.

According to the invention that problem is solved by the totality of the features of claim 1.

In accordance with the invention the vapour generator is arranged within the baking chamber in which the radiators are also arranged, and above the uppermost radiator. In other words the vapour generator, also referred to as the vapour apparatus, is disposed within the baking muffle in which the radiators are also disposed. The radiators project horizontally into the baking muffle. Disposed between the radiators are receiving spaces for the raw pastries to be baked. Unlike the situation with the baking ovens known from the state of the art the vapour generator is not separated from the baking muffle by the thermally insulated top wall of the oven housing. In practice the vapour apparatus can be disposed at a small spacing directly above the uppermost radiator or can rest on the uppermost radiator.

Whereas in known baking ovens solely the heat generated in a heating device of the vapour generator was available for generating a vapour cloud, in accordance with the invention the vapour apparatus is also heated by the oven heat within the baking muffle, that is to say also by the radiators. That results in an increase in the heat energy fed to the vapour apparatus. The recovery time of the vapour apparatus, that is to say the time between the generation of two successive vapour clouds is reduced. Usually the recovery time is 16 - 20 minutes or more for baking ovens according to the prior art. That may be excessively long in the case of small pastries in order to subject each fresh batch to vapour treatment directly after being introduced into the oven, with a sufficient vapour cloud. The recovery time can be considerably reduced by virtue of arranging the vapour apparatus within the baking muffle and above the uppermost radiator.

In addition the baking result can also be positively influenced. In the case of conventional baking ovens the insulating top wall of the oven housing is directly above the uppermost radiator. The result of this is that the uppermost radiator can only deliver its heat downwardly. The top heat in the region of the uppermost radiator is consequently very much greater than beneath the radiators which are disposed therebeneath and which at the same time form the bottom heat of the level thereabove. That also applies in regard to the feed of the vapour cloud. The vapour cloud cools the lower radiators both at the top side and also at the underside. It is only the uppermost radiator that is cooled exclusively at the bottom by an introduced vapour cloud.

That imbalance is reduced or eliminated by arranging the vapour apparatus directly over the uppermost radiator. In the case of vapour generation, the region above the uppermost radiator is also cooled down as the vapour apparatus is cooled by the feed of water. In normal baking operation the uppermost radiator also delivers its heat energy into the vapour apparatus disposed thereabove so that its delivery of energy to the baking level disposed therebeneath is similar to that in the case of the radiators disposed therebeneath.

Finally the novel design configuration makes it possible to achieve savings in the building of the baking oven. The vapour apparatus itself does not have to be fitted complete with its own thermally insulated housing on to the baking oven housing. It is integrated into the baking oven housing and is also enclosed by the insulating wall thereof.

In practice the vapour generator has a receiving case which is within the baking muffle and in which a heating device, a heat storage body and a water feed are arranged. The heat storage body is preferably a mass of metal which stores the supplied heat energy and delivers it again upon being sprayed with water. As described in DE 10 2005 058 592 A1 the heat storage body can preferably comprise a link-type chain which fills up the internal space of the receiving case.

In practice the radiators can be heated with thermo-oil. For that purpose the radiators can comprise two-layer sheet metal, with heating passages for thermo-oil to flow therethrough being formed between the two sheet metal layers. The heating passages are separated from each other by roll welded seams.

Preferably the heating device of the vapour apparatus is also operated with thermo-oil. It may comprise a heating coil which has thermo-oil flowing therethrough.

The receiving case of the vapour apparatus is integrated into a unit forming the top wall of the baking chamber. The vapour apparatus is consequently integrated into a load-bearing component of the baking oven and not simply fitted on to the oven housing.

### Brief description of drawings

A practical embodiment of the invention is described hereinafter with reference to the accompanying drawings.

Figure 1 shows a front view of a baking oven according to the invention with the baking oven housing removed.

Figure 2 shows a rear view of the baking oven of Figure 1.

Figure 3 shows a sectional side view of the baking oven of Figures 1 and 2.

Figure 4 shows a plan view of the baking oven of Figures 1 - 3.

### Description of embodiments

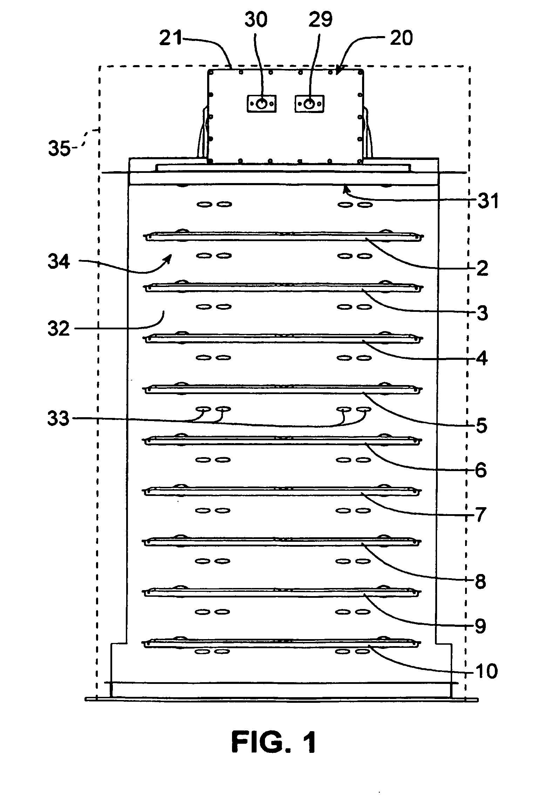

Figures 1 - 4 diagrammatically show the elements of a baking oven according to the invention, that are to be introduced within a baking oven housing 35. The oven housing 35 is only diagrammatically illustrated in Figure 1 and includes all oven components shown in the drawings.

In the present case the baking oven has ten radiators 1 -10 projecting horizontally from a rear wall 32 into the baking chamber 34. It will be appreciated that the number of radiators may be different in other embodiments. The radiators 1 - 10 are in the form of thermo-oil radiators. They can comprise for example two-layer sheet metal, with heating passages for thermo-oil to flow therethrough being formed between the two sheet metal layers. Other configurations of radiators 1 - 10 however are also known. They can also be constructed for example from quadrangular tubes.

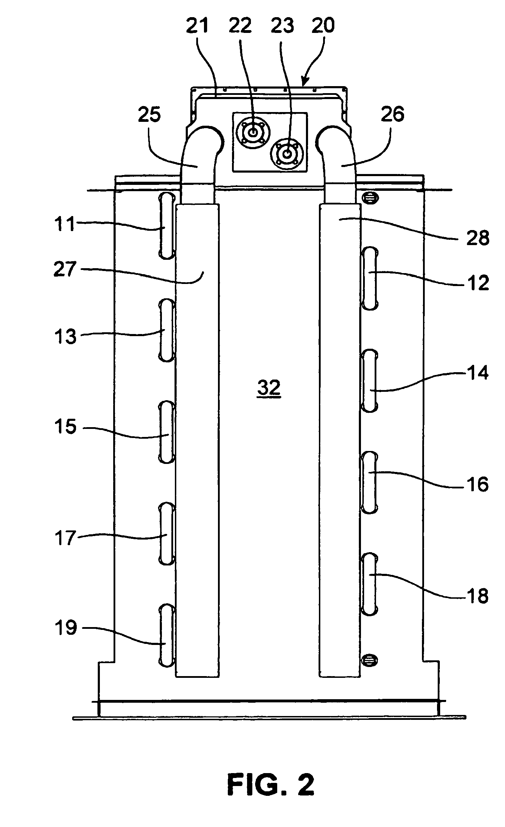

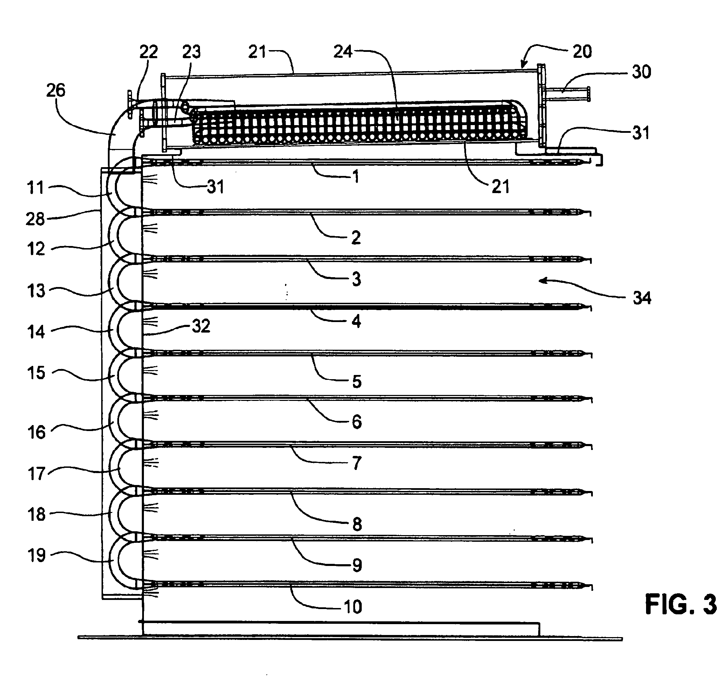

Figures 2 and 3 show the thermo-oil conduits 11 - 19 which ensure the feed and discharge of thermo-oil to and from the radiators 1 - 10. The thermo-oil conduits 11 - 19 extend substantially behind the rear wall 32 of the baking chamber 34 - as viewed from the baking chamber 34.

The baking oven has a vapour apparatus 20, the structure of which can be seen in particular from Figure 3. The vapour apparatus 20 is arranged directly above the top side of the uppermost radiator 1. The vapour apparatus 20 includes a receiving case 21 which is integrated into the cover 31 of the baking chamber. In that way the receiving case 21 is heated by the radiant heat and the convection heat of the uppermost radiator 1.

For additional heating the vapour generator 20 which is also referred to as the vapour apparatus has a heating device 24 in its receiving case 21. The heating device comprises a heating coil 24 supplied with thermo-oil by way of thermo-oil conduits 22, 23.

In addition a heat storage body can be fitted into the receiving case 21. In practice the heat storage body can comprise the chain links of a link-type chain.

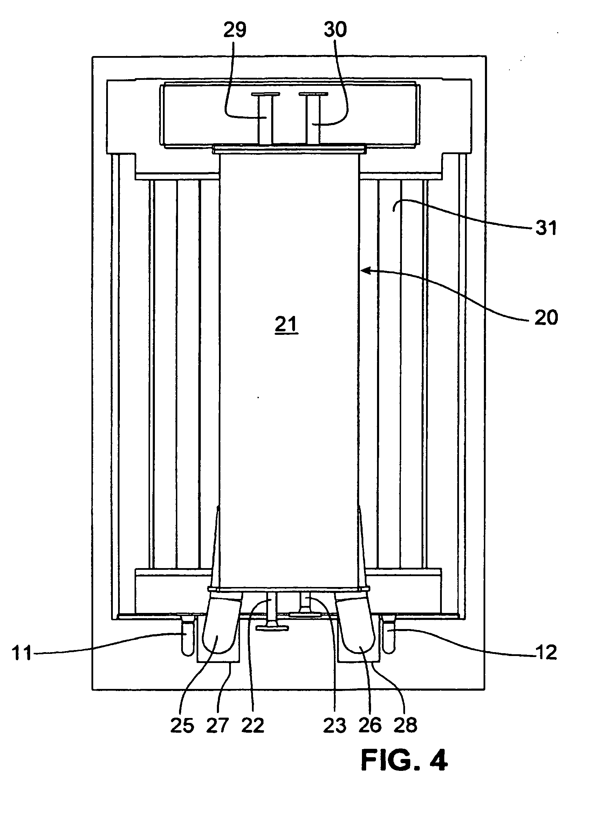

Water injection pipes 29, 30 (see Figure 4) open into the receiving case 21 in opposite relationship to the thermo-oil conduits 22, 23. Water can be injected into the vapour apparatus 20 through those water injection pipes 29, 30, and abruptly evaporates. Pipe bends 25 and 26 pass out of the receiving case 21 at the rear side into vapour passages 27, 28 extending behind the rear wall 32 of the baking chamber 34. Arranged in the rear wall 32 in each baking level, that is to say between each two respective radiators, are through-flow openings 33 which permit the intake of vapour out of the vapour passages 27, 28. That achieves a uniform homogeneous vapour treatment in the baking chamber 34, with a vapour cloud.

The entire baking oven unit shown in Figures 1 - 4 is introduced into a thermally insulated baking oven housing 35 (see Figure 1). In that way the heat is fed within the baking oven to the vapour apparatus 20 arranged within the thermally insulating housing 35 so that the additional supply of heat by means of thermo-oil can be reduced and energy can be saved.

List of references
1 -10 radiators
11 - 19 thermo-oil conduits
20 vapour generator, vapour apparatus
21 receiving case
22, 23 thermo-oil conduits
24 heating coil, heating device
25 pipe bend
26 pipe bend
27, 28 vapour passages
29, 30 water injection pipes
31 cover of the baking chamber
32 rear wall of the baking chamber
33 through-flow openings
34 baking chamber
35 oven housing

## Claims

1. A baking oven comprising
- an oven housing (35),
- a baking chamber (34) in the oven housing (35),
- multiple radiators (1-10) having heating passages for thermo-oil to flow therethrough and projecting into the baking chamber,
- receiving spaces for the raw pastries to be baked disposed between the radiators, and
- a vapour generator (20) having a receiving case (21) in which a heating device (24), a heat storage body and a water feed are arranged, **characterised in that** the vapour generator (20) is arranged within the baking chamber in which the radiators (1-10) are also arranged and is above the uppermost radiator (1), and that the receiving case (21) is integrated into a unit forming the cover (31) of the baking chamber (34).

2. A baking oven according to claim 1 **characterised in that** the receiving case (21) is disposed without a spacing or with a small spacing above the uppermost radiator (1).

3. A baking oven according to claim 1 or 2 **characterised in that** the radiators (1-10) are heated with thermo-oll.

4. A baking oven according to one of the preceding claims **characterised in that** the heating device has at least one heating coil (24) through which thermo-oil flows.

## Patentansprüche

1. Backofen mit
- einem Ofengehäuse (35),
- einem Backraum (34) in dem Ofengehäuse (35),
- mehreren in den Backraum ragenden Radiatoren (1-10) mit Heizkanälen zum Durchströmen von Thermoöl,
- Aufnahmeräume für die zu backenden Teiglinge zwischen den Radiatoren und
- einem Dampferzeuger (20) mit einen Aufnahmekasten (21), in dem eine Heizvorrichtung (24), ein Wärmespeicherkörper und eine Wasserzufuhr angeordnet sind,
**dadurch gekennzeichnet, dass** der Dampferzeuger (20) innerhalb des Backraums, in dem auch die Radiatoren (1-10) angeordnet sind, und oberhalb des obersten Radiators (1) angeordnet ist und dass der Aufnahmekasten (21) in eine Baueinheit integriert ist, die die Decke (31) des Backraums (34) bildet.

2. Backofen nach Anspruch 1, **dadurch gekennzeichnet, dass** der Aufnahmekasten (21) ohne oder mit geringem Abstand über dem obersten Radiator (1) liegt.

3. Backofen nach Anspruch 1 oder 2, **dadurch gekennzeichnet, dass** die Radiatoren (1-10) mit Thermoöl beheizt werden.

4. Backofen nach einem der vorangehenden Ansprüche, **dadurch gekennzeichnet, dass** die Heizvorrichtung mindestens eine von Thermoöl durchströmte Heizwendel (24) aufweist.

## Revendications

1. Un four de cuisson comprenant
- un boîtier de four (35),
- une chambre de cuisson (34) dans le boîtier du four (35),
- des corps de chauffe multiples (1-10) ayant des passages de chauffage pour permettre l'écoulement de l'huile thermique et sa projection dans la chambre de cuisson,
- des espaces de réception pour les pâtisseries crues à cuire disposés entre les corps de chauffe, et
- un générateur de vapeur (20) comportant une chambre de réception (21) dans laquelle sont agencés un dispositif de chauffage (24), un organe de stockage de chaleur et une alimentation d'eau, **caractérisé en ce que** le générateur de vapeur (20) est disposé dans la chambre de cuisson dans laquelle les corps de chauffe (1-10) sont également agencés et se trouve au-dessus du corps de chauffe le plus haut (1), et **en ce que** la chambre de réception (21) est intégrée dans une unité formant le couvercle (31) de la chambre de cuisson (34).

2. Un four de cuisson selon la revendication 1 **caractérisé en ce que** la chambre de réception (21) est disposée sans espacement ou avec un faible espacement au-dessus du corps de chauffe situé le plus haut (1).

3. Un four de cuisson selon la revendication 1 ou 2, **caractérisé en ce que** les corps de chauffe (1-10) sont chauffés à l'huile thermique.

4. Un four de cuisson selon l'une des revendications précédentes, **caractérisé en ce que** le dispositif de chauffage a au moins une bobine de chauffage (24) à travers laquelle s'écoule l'huile thermique.
